# EUROPEAN PATENT APPLICATION

(11) **EP 1 093 901 A1**
(43) Date of publication of application: **25.04.2001**
(21) Application number: 99121164.0
(22) Date of filing: 22.10.1999
(51) Int. Cl.: B29C 33/38, B29C 33/56, B29C 33/42

(54) **A manufacturing method for engineering plastic embossing roll**

(71) Applicant: NAN YA PLASTICS CORPORATION, Taipei (TW)
(72) Inventor: Chang, Shin-Fa, Taipei 105 (TW)
(74) Representative: Grünecker, Kinkeldey, Stockmair & Schwanhäusser Anwaltssozietät

(57) **Abstract**

A high imitation and heat resistance engineering plastic embossing roll can be used to replace conventional metal iron embossing roll, the pattern on the surface of the embossing roll is copied from natural pattern such as animal, plant and knitted fabric pattern. Copy the pattern by using silicone rubber and epoxy resin through repeated arrangement, binding, trimming, design, then make the silicone rubber cylinder. By injecting into mold and using transmission system and operating at low temperature of 20o C to high temperature of 190°C, in conjunction with vacuum motor system and pressure system, the ready mixed engineering plastic compounding is injected by pressure into injecting mold to attach on the pattern of the silicone rubber cylinder, and formed to finish the engineering plastic embossing roll.

## Description

### Background

This invention relates to a manufacturing method for engineering plastic embossing roll, particularly for high imitation and heat resistance engineering plastic embossing roll.

In recent years, the development of the market of imitation leather is directing to the production for high quality, high additional value, to satisfy the consumers need.

The applicant designs a high imitation and heat resistance embossing roll, whereon the pattern was copied from animating the nature and knitted fabric pattern, then the engineering plastic embossing roll was invented. This is a major breakthrough in the manufacture technique of the high imitation leather. The high imitation and heat resistance embossing roll of this invention can further be processed to the surface of imitation leather to make highly imitative pattern, so as to permit the high imitation product to have more market competence.

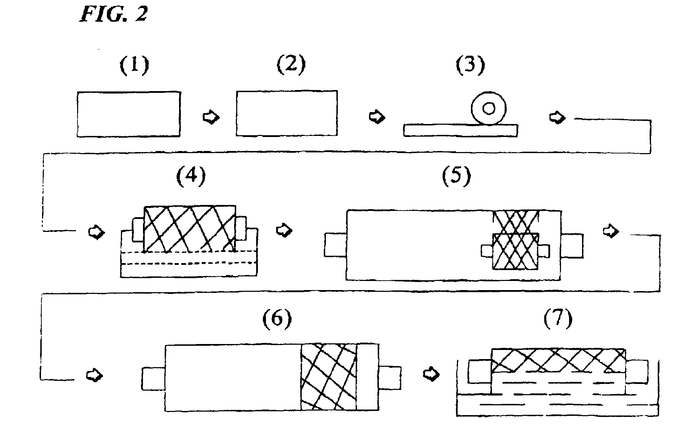

Generally the manufacture process of iron metal embossing roll shown as Fig 2 includes: (1) Designing the pattern of silicone rubber: The pattern of the imitation leather can be completely copied by way of the well-designed silicone rubber, by using the patterns of upper, lower, left and right unit; (2) Molding the patterned acetal resin sheet: Replicately copying the pattern on the surface of the acetal sheet from (1); (3) Progressing press process on the replication machine: Place the acetal sheet of (2) on the platform, using the replication machine to reciprocate copying the pattern to wheel tool; (4) Etching by nitric acid: Applying asphalt emulsion to form protection layer on the patterned surface of the acetal sheet of (2), by means of the transferring of the replicate machine to expose the pattern of wheel tool, then etching the pattern by nitric acid; (5) Final transferring press: Dividing the wheel tool having ready-made pattern into several parts and using the transferring of the replication machine to transfer the patterns onto a large diameter iron roll, applying similarly the asphalt emulsion as protection layer on the iron roll; (6) Etching again by nitric acid: Squeezing the asphalt emulsion out by the pressure of the iron roll so as to expose the pattern on the iron roll, then etching the pattern by nitric acid; (7) Plating with chrome: Further plating the large diameter embossing iron roll with chrome, then finishing the manufacture process.

### Prior art

The deficiencies of the manufacture process of iron embossing roll in the prior arts include:
1. Whether manual process or steel rope transmission process used to copy the pattern from acetal sheet by using the iron wheel tool, the accuracy and precision of copying pattern of the iron wheel tool may be lowered.
2.The size of the pattern unit may be restricted, especially it is difficult in the manufacture of the pattern copying on the larger and smaller size of the iron wheel tool.
3.During the pattern copying on the iron wheel tool and the acetal sheet, the nitric acid etching process frequently cause the original pattern to be distorted, and the operator hand may always be exposed to the nitric acid, which is harmful to human.
4.The quality and accuracy of the iron wheel tool depends completely on the skilled manual operation, which can not be replaced by machine. So the manufacture level can not be effectively elevated.
5.The conventional iron embossing roll used to embossing process of the imitation leather may become thinner, and bad texture due to etching, so the quality may often vary. In view of the disadvantages of the manufacture process of the conventional iron embossing roll, the quality of the product can not upgrade. Moreover, the applicant has accumulated over thirty years experience in manufacturing the embossing roll, studied hard to raise the quality, finally invented this invention titled as "a manufacturing method for engineering plastic embossing roll". This invention indeed is practical and economic, and is of industrialized applicability in itself. It is a significant break-through in the manufacture skill of imitation leather pattern industry, and is energy saving. It can raise the high imitation, lower the cost of imitation leather.

### Summary of the invention

The manufacturing method of this invention is not only a break-through in the prior conventional manufacturing method, but also the product made by this method may have advantages as follows:
1. Being adaptable to fashion pattern: The feature of this invention is that the product made by this method can be rapidly pushed into the market than the product made by prior method. This method can shorten the manufacture time and raise the imitation degree, quality, particularly suitable in producing sample pattern.
2. Increasing the product usable scope: The products obtained by this invention have good imitation, which shows the texture of genuine leather. Whatever the semi-product of imitation leather have any thickness, it will be perfectly able to exhibit various pattern. Each pattern may not be restricted by its size, it will not be achieved by prior art.
3. Being suitable to the product with specific embossing pattern: It may be exhibited in any pattern of deep carved embossment and finely complicated surface, substantially raises the gradation of value. This will not be achieved by prior art.
4. Comparing the imitation leather obtained by using this invention with that of conventional prior method, the physical properties and the embossment pattern of the products would be illustrated in the following table.

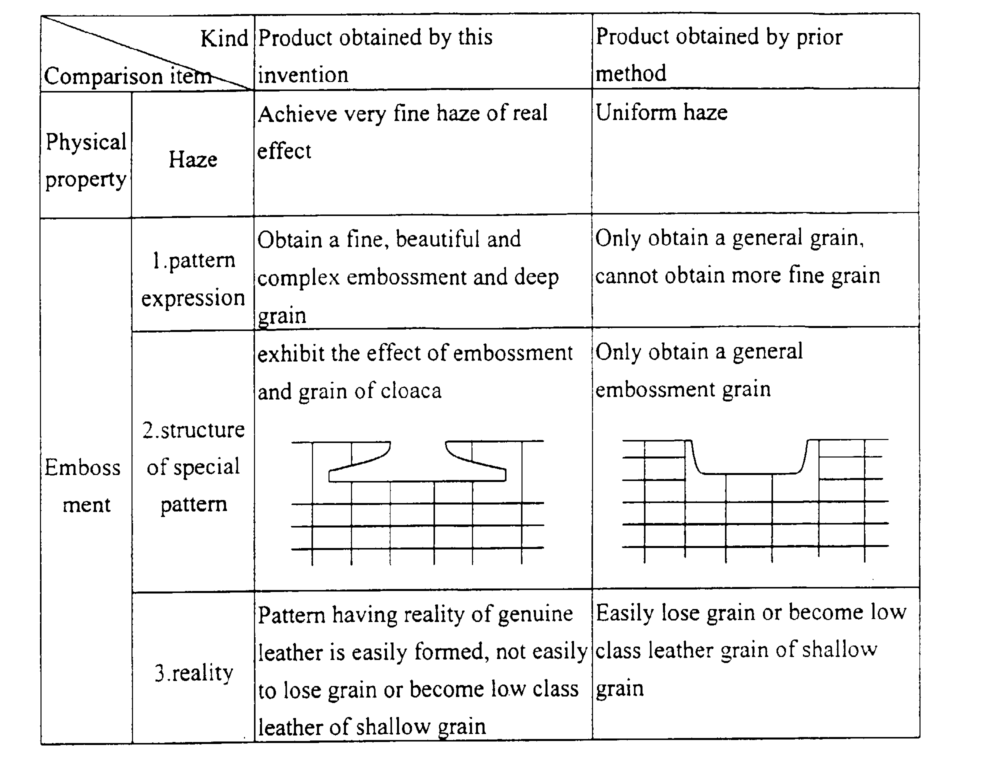

### Detailed description of the preferred embodiment

The steps according to the method of this invention which will be described hereinafter can be able to solve the above mentioned problems.

The engineering plastic embossing roll obtained by this invention can be manufactured by using mainly room temperature type polyamide imide (PAI), epoxy resin, with the addition of the metal powder of iron, aluminum, magnesium, zinc, by using vacuum system and inject molding to cope with a temperature change, the high imitation "engineering plastic embossing roll" with newly designed pattern may be made, and then copying the makeup pattern to the surface of the imitation leather, in order to make high quality and unique product. This novel manufacturing method is not yet disclosed.
1. The manufacturing method of the engineering plastic embossing roll according to the invention, is obtained by first choosing the pattern, and a negative sheet is molded from silicone rubber to reproduce with the chosen pattern. Then a positive pattern is molded from polyvinyl chloride to reproduce the negative sheet. Moreover, the originally designed pattern is molded from epoxy resin upon the above-mentioned positive pattern of polyvinyl chloride. Silicone resin, such as room temperature vulcanization (RTV) type silicone resin is molded upon the above-mentioned molded pattern negative sheet of polyvinyl chloride, and pieced together in up-and-down manner to form a positive pattern unit, and a negative original sheet is molded from epoxy resin upon the above mentioned positive pattern unit, and the negative original sheet will be trimmed later. Silicone resin is repeatedly used to copy the original sheet and molded upon the above-mentioned negative original sheet to form a positive pattern of left-and-right manner. These positive patterns can form a large unit positive pattern, and can be copied to form negative pattern original by using epoxy resin; then using silicone rubber to cover the epoxy resin large unit original in separate zone, and form a large size silicone rubber cylinder. The said large size silicone rubber cylinder can also be duplicated by using polyvinyl chloride resin for spare use.
2. Cutting the unnecessary ends of the above mentioned large size silicone rubber cylinder, then fixing the said silicone rubber cylinder into the cavity of the injecting mold with vacuum device. The engineering plastic compounding composed of epoxy resin and metal powder can be injected into the injecting mold having the said silicone rubber cylinder surrounded with, then cured from low temperature to high temperature by using the transmission system to obtain high imitation engineering plastic embossing roll.

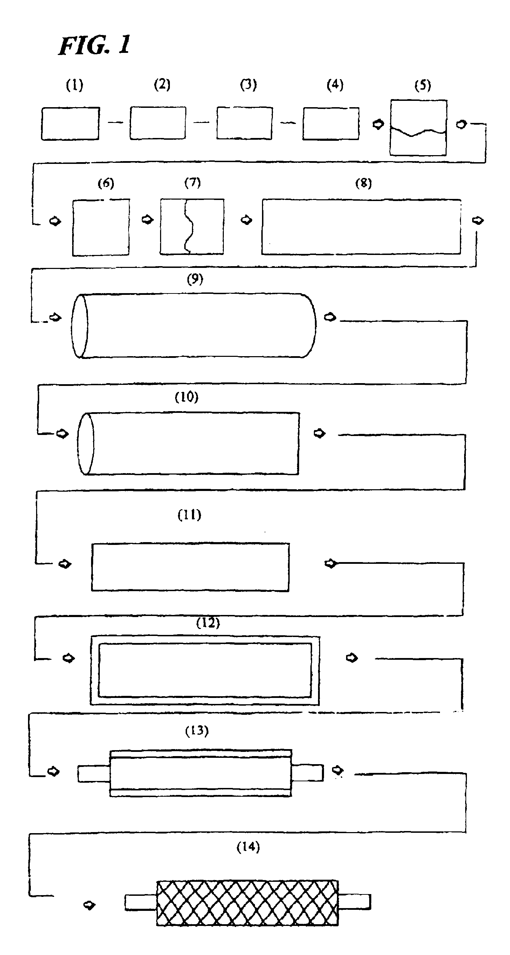

Now, this invention will be described hereinafter with reference to the steps shown in the accompanying fig.1.
[Step 1] choosing the pattern: the valuable pattern can be chosen from the natural leather or natural pattern such as animal, plant and knitted fabric pattern, and plan it to manufacture.
[Step 2] copying the pattern by using RTV type silicone rubber: copy from the chosen pattern by silicone rubber to form a negative sheet.
[Step 3] copying the pattern by using polyvinyl chloride (PVC): copy from the silicone rubber negative sheet of step 2 by polyvinyl chloride to form a positive sheet.
[Step 4] copying the pattern by using epoxy resin: copy from the polyvinyl chloride positive sheet of step 3 to form a negative sheet and the said negative sheet become to originally designed sheet, hereinafter call it "the original"
[Step 5] designing the up and down pattern: repeatedly piece together the original of step 4 in up-and-down manner by RTV type silicone resin in order to form a positive pattern unit.
[Step 6] duplicating the positive unit of epoxy resin: copy from the above-mentioned positive pattern unit by epoxy resin to form a negative original sheet and trim it.
[Step 7] designing the right and left pattern: repeatedly piece together the negative original sheet in right-and-left manner by RTV type silicone resin to form a positive pattern unit, and designate it as a large unit.
[Step 8] duplicating the large unit of epoxy resin: copy from the above-mentioned large unit of step7 by epoxy resin to form an epoxy resin negative original sheet.
[Step 9] designing the coating of silicone rubber cylinder: the epoxy resin large unit can be sectionally coated with silicone rubber to form a silicone rubber cylinder of diameter 100∼500 mm and of length 1000∼2000 mm.
[Step10] manufacturing the cylinder of polyvinyl chloride: duplicate a polyvinyl chloride cylinder from the silicon rubber cylinder as the original source mold, which will be in good preservation, for duplicating the cylinder source mold.
[Step11] installing in the injection mold: mount the silicone rubber cylinder of step 9 onto the injecting mold cylinder by means of vacuum equipment.
   By completely mixing the engineering plastic compounding composed of room temperature type of epoxy resin with metal powder in a mixing barrel and evacuate the gas in the engineering plastic compounding by vacuum system, then injecting the above-mentioned engineering plastic compounding into the injecting mold by the pressure of pressure system. Therefore, the novel engineering plastic embossing roll parison is obtained.
[Step12, 13] the embossing roll parison may cool down naturally after injecting mold process, then unload the obtained engineering plastic embossing roll parison. Insert iron roll into the thus obtained engineering plastic embossing roll parison to get the engineering plastic embossing roll.

The above-mentioned engineering plastic embossing roll can be cured to reinforce by the transmission system of 30∼360rpm and the temperature range from 20 to 190°C, then the novel high imitation "engineering plastic embossing roll" can be provided. This invention not only improve the imitation leather, which is not achieved by conventional method of manufacturing iron embossing roll, but also increases the value of the product and in saving time and cost.

The engineering plastic embossing roll manufactured by this invention may consist of the engineering plastic such as vinyl ester (available by Nan Ya plastic corporation, Taiwan), and engineering plastic available by one or than one selected from EP-201, EP-202 (trade mark of Nan Ya plastic corporation, Taiwan), EP-250 (product of DELTA-TECH ASIA Co. LTD., Germany), and GT-200 (product of SUN TONE CORPARATION, LTD., Taiwan). Preferably used is GT-200.

It will be described hereinafter the embodiment of engineering plastic embossing roll molded from engineering plastic compounding consisted of epoxy resin with metal powder.
1.First copy the pattern from the natural leather by silicone resin, and arrange the pattern into up, low and right, left unit, repeatedly enlarge the unit to large unit design original, the materials used in this process are silicone resin and polyvinyl chloride.
2. After the large unit epoxy resin negative original sheet have been prepared, RTV type silicone resin is coated onto the sectionally divided epoxy resin unit, then piece together to form the silicone rubber cylinder of diameter 100 ∼ 500 mm and length 1000 ∼ 2000 mm.
3. For the sake of the need in successive manufacture of engineering plastic embossing roll, it is necessary to duplicate a polyvinyl chloride cylinder as the original source mold for the above mentioned silicone rubber cylinder.
4. Mount the silicone rubber cylinder in the injecting mold cylinder by using vacuum system to suck the cylinder adhering onto the mold surface.
5. By using mixing barrel and pressure tank (accumulator), the enginnering plastic compounding can be transferred by pressure into the injecting mold, cured in the temperature range of 20∼190°C, and cooled down naturally, therefore an engineering plastic embossing roll parison is obtained. The engineering plastic embossing roll can thus assembled by inserting iron roll into the above-obtained engineering plastic embossing roll.

According to the above description, this invention can manufacture the imitation leather, which have high imitation pattern, increase the value, reduce the cost, and avoid the pollution.

### Brief description of the drawing

Fig.1 illustrates a flow chart for carrying out this invention, wherein
(1) designing the pattern from the natural leather or the others of the natural pattern.
(2) copying from the chosen patterned by silicone resin to form a negative sheet.
(3) copying from the silicone rubber by PVC to form a positive sheet.
(4) copying from the PVC positive sheet of step 3 by epoxy resin to form a negative sheet as " the original".
(5) repeatedly piecing together the original of step 4 in up-and -down manner by RTV type silicone resin to form a positive pattern unit.
(6) copying from the positive pattern unit obtained in step 5 by epoxy resin to form a negative original sheet.
(7) repeatedly piecing together the negative original sheet of step 6 in right-and-left manner by RTV type silicone resin to form a positive pattern unit as a large unit.
(8) copying from the large unit of step 7 by epoxy resin to form an epoxy resin negative original sheet.
(9) after the large unit epoxy resin negative original sheet have been prepared, RTV type silicone resin is coated onto the sectionally divided epoxy resin unit, then piecing them together to form a silicone rubber cylinder.
(10) duplicating from the silicone rubber cylinder by PVC to form a PVC cylinder as an original source mold for spare use. Cutting the unnecessary ends of the silicone rubber cylinder of step 9 into smaller size.
(11) mounting the silicone rubber cylinder onto the injecting mold cylinder by means of vacuum equipment.
(12) then injecting the engineering plastic compounding into the injecting mold having the silicone rubber cylinder surrounded with.
(13) evacuating the gases in the injecting by vacuum system, heating up and curing to get an engineering plastic embossing roll parison(14).
(14) then inserting iron roll into the thus obtained engineering plastic embossing roll parison to get an engineering plastic embossing roll.

Fig.2 illustrates a flow chart of conventional method of iron embossing roll, wherein
(1) designing the pattern of silicone rubber.
(2) molding an acetal resin patterned sheet.
(3) progressing press process on the replication machine.
(4) etching by nitric acid.
(5) final transferring press process for the iron embossing rolls.
(6) etching again by nitric acid.
(7) plating with chrome.

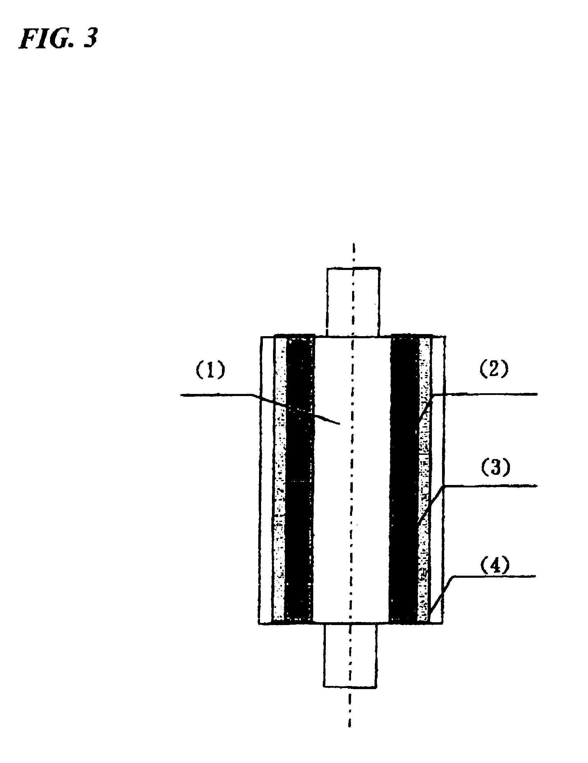

Fig.3 illustrates a product of the engineering plastic embossing roll obtained by this invention, wherein
(1) iron roll.
(2) a layer of engineering plastic.
(3) silicone hose.
(4) external mold.

## Claims

1. A manufacturing method for engineering plastic embossing roll, comprising the steps:
(1) choosing the pattern from the natural pattern;
(2) copying from the chosen patterned by room temperature vulcanization (RTV) type silicone resin to form a silicone rubber negative sheet;
(3) copying from the silicone rubber negative sheet of step 2 by polyvinyl chloride (PVC ) to form a positive sheet;
(4) copying from the PVC positive sheet of step 3 by epoxy resin to form a negative sheet as " the original";
(5) repeatedly piecing together the original of step 4 in up-and -down manner by RTV type silicone resin to form a positive pattern unit;
(6) copying from the positive pattern unit obtained in step 5 by epoxy resin to form a negative original sheet;
(7) repeatedly piecing together the negative original sheet of step 6 in right-and-left manner by RTV type silicone resin to form a positive pattern unit as a large unit;
(8) copying from the large unit of step 7 by epoxy resin to form a epoxy resin negative original sheet;
(9) after the large unit epoxy resin negative original sheet have been prepared, RTV type silicone resin is coated onto the sectionally divided epoxy resin unit, then piecing them together to form a silicone rubber cylinder;
(10) duplicating from the silicone rubber cylinder by PVC to form a PVC cylinder as an original source mold for spare use and cutting the unnecessary ends of the silicone rubber cylinder of step 9 into smaller size;
(11) mounting the silicone rubber cylinder onto the injecting mold cylinder by means of vacuum equipment;
(12) then injecting the engineering plastic compounding into the injecting mold having the silicone rubber cylinder surrounded with;
(13) evacuating the gases in the injecting by vacuum system, heating up and curing to get an engineering plastic embossing roll parison(14);
(14) then inserting iron roll into the thus obtained engineering plastic embossing roll parison to get an engineering plastic embossing roll.

2. A manufacturing method for engineering plastic as claimed in claim 1, wherein said silicone rubber cylinder can be made into a dimension of diameter 100∼500 mm and length 1000∼2000 mm.
